(19) Europäisches Patentamt
European Patent Office
Office européen des brevets

(11) Numéro de publication: **0 148 684**
**B2**

(12) # NOUVEAU FASCICULE DE BREVET EUROPEEN

(45) Date de publication du nouveau fascicule du brevet: **10.10.90**

(51) Int. Cl.$^5$: **C 01 B 3/34**

(21) Numéro de dépôt: **84402617.9**

(22) Date de dépôt: **17.12.84**

(54) **Nouveau procédé de fabrication de gaz de synthèse utilisable notamment pour la production de methanol.**

(30) Priorité: **30.12.83 FR 8321078**

(43) Date de publication de la demande:
**17.07.85 Bulletin 85/29**

(45) Mention de la délivrance du brevet:
**29.04.87 Bulletin 87/18**

(45) Mention de la decision concernant l'opposition:
**10.10.90 Bulletin 90/41**

(84) Etats contractants désignés:
**DE GB IT NL**

(56) Documents cités:
**BE-A- 750 881**
**CA-A- 564 214**
**DE-A-1 567 709**
**DE-A-2 148 430**
**DE-C-2 758 395**
**FR-A-2 247 441**
**FR-A-2 287 415**
**GB-A-2 099 846**
**US-A-2 683 121**

(73) Titulaire: **INSTITUT FRANCAIS DU PETROLE**
**4, Avenue de Bois-Préau**
**F-92502 Rueil-Malmaison (FR)**

(72) Inventeur: **Quang, Dang Vu**
**48, bis Boulevard du Général Leclerc**
**F-92200 Neuilly sur Seine (FR)**
Inventeur: **Raimbault, Claude**
**Résidence de la Source 17-19 Rue de Maule**
**F-78870 Bailly (FR)**
Inventeur: **Bonifay, Régis**
**21, rue de l'Alma**
**F-92600 Asnieres (FR)**
Inventeur: **Le Page, Jean-François**
**13, rue des Primevères**
**F-92500 Rueil-Malmaison (FR)**

**EP 0 148 684 B2**

**Description**

On sait que le méthanol, l'un des plus grands intermédiaires de la chimie organique, se fabrique essentiellement à partir de mélanges d'hydrogène et d'oxydes de carbone, couramment appelés "gaz de synthèse" selon les réactions équilibrées.

$$CO + 2H_2 \rightleftarrows CH_3OH \quad [1]$$

$$CO_2 + 3H_2 \rightleftarrows CH_3OH + H_2O \quad [2]$$

La presque totalité du gaz de synthèse destiné à la fabrication de méthanol provient du reformage à la vapeur d'eau, du gaz naturel dont le composant principal est le méthane qui réagit avec l'eau selon les réactions suivantes

$$CH_4 + H_2O \rightleftarrows CO + 3H_2 \quad [3]$$

$$CH_4 + 2H_2O \rightleftarrows CO_2 + 4H_2 \quad [4]$$

Les homologues du méthane, présents en proportion mineure dans le gaz naturel réagissent de manière analogue, selon une stoechiométrie bien connue.

Le rôle prépondérant du gaz naturel en tant que matière première de synthèse du méthanol s'explique, du point de vue économique, par son abondance et son prix attractif et, du point de vue technique, par sa facilité de mise en oeuvre et par la grande pureté du gaz de syntèse qui en est issu.

L'emploi du gaz naturel présente toutefois un inconvénient: la composition du gaz de synthèse qu'il donne est loin de correspondre à la composition optimale requise pour la synthèse du méthanol.

En effet, lorsqu'on rapproche les équations [1], et [2] des équations [3] et [4] on s'aperçoit aisément que, pour chaque molécule de méthanol fabriquée selon [1] et [2], le gaz de reformage, obtenu selon [3] et [4], donne une molécule d'hydrogène en trop.

Même dans les cas favorables où il peut être valorisé, cet hydrogène est toujours produit à un coût qui dépasse celui d'hydrogène produit par des méthodes mieux adaptées.

Un autre inconvénient du gaz de reformage est sa pression trop faible en regard des exigences de la synthèse du méthanol.

La raison est d'origine à la fois technologique et thermodynamique.

En effet, à température et rapport $H_2O/C$ constants, plus on augmente la pression, plus on laisse du méthane non-converti dans le gaz de synthèse (p. Wellman et S. Katell, Hydrocarbon processing n° 6 vol 42 juin 1962).

Un accroissement de la température de réaction pourrait théoriquement accroître la conversion du méthane, mais on est rapidement arrêté par le phénomène du fluage des métaux et il est donc difficile de dépasser 850 degrés centigrades dans les tubes de reformage.

De même, pour des raisons énergétiques, on ne peut accroître le rapport $H_2O/C$ au-delà de 3 à 4.

Avec ces limitations, afin de ne pas augmenter exagérement la teneur en méthane résiduaire, il est d'usage de faire le reformage à la vapeur du gaz naturel sous une pression n'excédant pas 3 MPa, alors que la synthèse du méthanol requiert habituellement des pressions d'environs 5 à 12 MPa.

Une autre méthode connue de production d'un gaz de synthèse est l'oxydation du méthane par l'oxygène. Du point de vue chimique pur, la réaction idéale de préparation du gaz de synthèse à partir du gaz naturel est la suivante.

$$CH_4 + 1/2\ O_2 \rightleftarrows CO_2 + 2H_2 \quad [5]$$

Cette réaction est couramment réalisée dans les procédés catalytiques d'oxydation partielle tels que le procédé ONIA—GEGI par exemple.

L'inconvénient majeur de ces procédés catalytiques est dû à leur fonctionnement atmosphérique.

Les frais recompression, pour amener leur gaz au niveau de pression de la synthèse du méthanol, les rendent économiquement peu satisfaisants.

Dans le milieu des années 50, des essais de mise sous pression de ces procédés catalytiques ont été tentés. Les résultats ont été décevants, car chaque fois qu'on à essayé de mélanger le gaz et l'oxygène sous haute pression et à haute température, des phénomènes d'explosion et de bouchages du lit catalytique dûs à une formation de suie trop importante se sont produits et ont arrêté les expériences en cours (Du Bois Eastman, Ind. Eng. Chem: vol. 48, p. 1118—1122, juillet 1956).

C'est la raison pour laquelle les procédés d'oxydation partielle actuels comme celui de la Shell (C.I. Reed et C.J. Kuhrese, Hydrocarbon Processing vol 67 (9), p. 191—194, septembre 1979) ou de la Texaco (W.L. Slater et R.M. Dille, Chem. Eng. prog. vol. 61 (N° 11), p. 85—88, novembre 1965) sont tous des procédés fonctionnant sous pression mais sans catalyseur et avec des rapports $O_2/C$ d'au moins 0.7 mole d'oxygène par atome de carbone contenu dans les hydrocarbures.

Ces procédés arrivent à produire du gaz de synthése sous une pression suffisante pour la synthèse directe du méthanol mais, malheureusement avec un grand excédent d'oxyde de carbone par rapport à l'hydrogène présent.

Dans certains cas particuliers, l'excédent en CO peut servir à fabriquer de l'acide acétique. Malheureusement la disproportion entre le marché du méthanol et celui de l'acide acétique ne permet pas de généraliser ce cas de figure favorable.

Il existe aussi des unités dites de reformages primaire et secondaire. Dans ces unités, à la sortie du reformage à la vapeur classique, on fait une injection d'air ou d'air enrichi en oxygène dans le gaz craqué et on envoie le tout sur du catalyseur dans une étape dite de reformage secondaire. (D.R. Holland et S.W. Wan, Chem. Eng. prog. vol 59 (8), p. 69—74, août 1963).

Ces unités échappent aux difficultés signalées par du Bois Eastman car, du fait de la dilution par l'azote et du faible pourcentage d'oxygène introduit, le mélange se trouve nettement en dessous de la limite inférieure d'explosivité.

A cause de la présence de l'azote et du rapport $H_2/CO$ élevé, ces unités ne sont utilisables malheureusement que dans les préparations de gaz de synthèse pour l'ammoniac.

Dans ce dernier cas, en effet, l'azote loin de représenter un diluant inerte coûteux est, au contraire, une matière première indispensable.

Récemment, en supprimant l'azote et an augmentant la proportion d'oxygène, it a été proposé (Brevet français n° 2372116) d'étendre ce mode de fonctionnement à l'oxygène pur et à la fabrication du gaz de synthèse pour le méthanol.

Comme on peut s'en rendre compte en consultant le tableau 1 ci-dessus, les zones d'explosivité de l'oxyde de carbone et de l'hydrogène sont encore plus étendues que celles du méthane et le perfectionnement proposé n'échappe pas aux difficultés signalées par la Société Texaco.

TABLEAU I

Limites D'Inflammabilite Des Gaz et Vapeur Dans L'oxygene
(d'après Patty)

Limites d'inflammabilité (en vol %)

| | Inférieure | Supérieure |
|---|---|---|
| Méthane $CH_4$ | 5.15 | 60.5 |
| Ethane $C_2H_6$ | 3.05 | 66.0 |
| Hydrogène $H_2$ | 4.65 | 93.9 |
| Oxyde de carbone CO | 15.5 | 93.9 |

Le procédé de la présente invention remédie aux défauts des procédés connus et permet de produire, en toute sécurité, un gaz de synthèse dont la composition et la pression conviennent directement à la synthèse du méthanol.

Ce procédé comprend les étapes suivantes:

a) On fait passer une première charge d'hydrocarbures, renfermant au moins 50% ne moles de méthane, et mélangée à de la vapeur d'eau sur un catalyseur de reformage à la vapeur d'eau, à une température de 600 à 1000°C, les conditions opératoires étant choisies de manière à ne convertir que 60 à 95% compté en carbone, de la charge d'hydrocarbures et l'on recueille un gaz relativement riche en hydrogène et renferment de la vapeur d'eau et la portion non-convertie de la charge d'hydrocarbures.

b) On soumet une seconde charge d'hydrocarbures, renfermant au moins 50% en moles de méthane, à une combustion par flamme au contact d'un gaz renfermant de 90 à 100% d'oxygène et en présence de vapeur d'eau, le rapport du nombre de molécules d'oxygène au nombre d'atomes de carbone de ladite seconde charge d'hydrocarbures étant de 0,55: 1 à 2:1, ladite combustion portant les gaz à une température de 1200 à 2500°C, et l'on recueille un gaz de combustion, relativement riche en oxydes de carbone.

c) On mélange le gaz obtenu á l'étape (a) avec le gaz obtenu à l'étape (b), on fait circuler le mélange résultant dans une zone de reformage à la vapeur d'eau et on recueille le gaz de synthése formé.

Dans le procédé ci-dessus, le gaz obtenu à l'étape (a) est relativement trop riche en hydrogène par rapport la proportion stoéchiométrique requise pour la synthèse du méthanol; le gaz obtenu à l'étape (b) a, au contraire, un excès d'oxydes de carbone (CO et/ou $CO_2$) par rapport à cette même stoéchiométrie; l'étape (c) permet de parfaire la conversion des hydrocarbures afin de se rapprocher du rapport stoéchiométrique requis par la synthèse du méthanol. La chaleur nécessaire à l'étape (c) est fournie par la chaleur sensible des gaz provenant de l'étape (b). Par un réglage adequat des proportions d'hydrocarbures, d'oxygène et de vapeur d'eau envoyées aux étapes du procédé, il est possible d'obtenir un gaz ayant la stoéchiométrie requise par la réaction de synthèse du méthanol.

La charge d'hydrocarbures est de préférence, constituée par du gaz naturel.

Les charges d'hydrocarbures des étapes (a) et (b) peuvent être deux fractions d'une même charge d'hydrocarbures, par exemple de gaz naturel.

L'ensemble du procédé peut être mis en oeuvre sous une pression de 1 à 20 MPa, de préférence 3 à 12 MPa.

Les débits des gaz de départ (étape a + étape b) sont maintenus dans une proportion sensiblement équivalente à celle définie par l'équation [5] c'est à dire telle que le rapport molécules d'oxygène/atomes de carbone du gaz soit compris entre 0,2 et 0,7, de préférence entre 0,25 et 0,5.

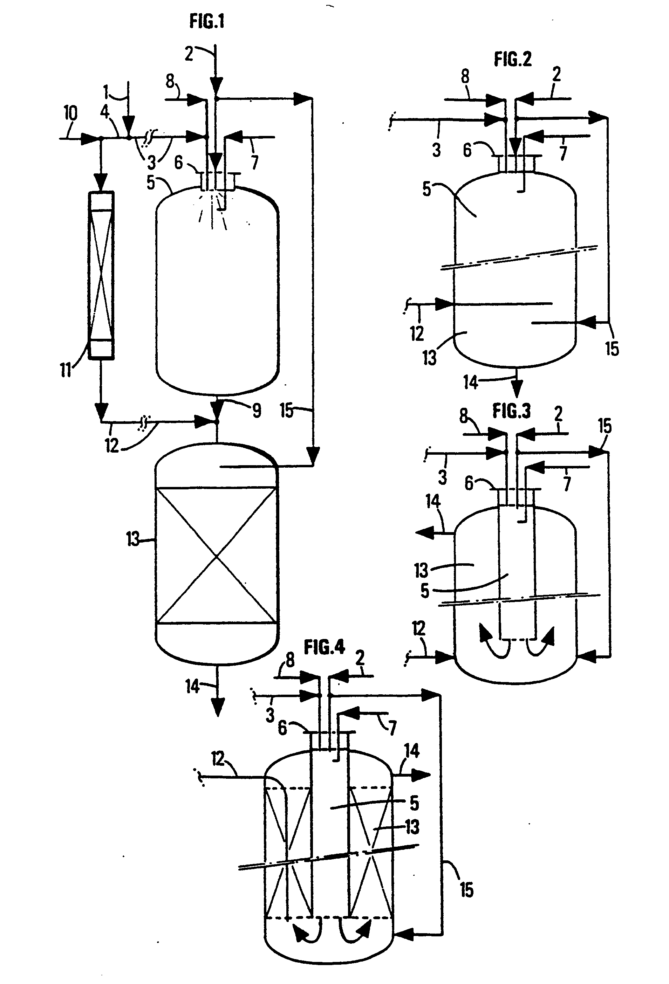

Les figures 1 à 4 illustent l'invention.

Le gaz naturel, amené par le conduit (1), est réparti entre les conduits (3) et (4). L'oxygène est introduit par le conduit (2).

Les conduits (2), et (3) aboutissent à l'enceinte de combustion contrôlée (5) équipée d'un brûleur (6).

Les brûleur (6) est caractérisé en ce que le gaz naturel et l'oxygène disposent de canaux d'arrivée séparés et ne se rencontrent qu'à l'endroit de la flamme vive maintenue en fonctionnent permanent, si nécessaire, au moyen d'un pilote allumeur (7).

La chambre de combustion (5) est dimensionnée de façon telle que, a sa sortie, l'oxygène libre aura substantiellement disparu, lié à l'hydrogène et au carbone sous forme de CO, CO2 et H2O.

Le temps de séjour des, gaz dans la zone de combustion (5) est avantageusement compris entre un millième de seconde et cent secondes, de préférence entre un centième de seconde et soixante secondes.

Toutes choses égales par ailleurs, le temps de séjour est lié à la température de la flamme: plus la flamme est chaude, plus le séjour peut être court, et le volume de l'enceinte (5) réduit.

Le temps de séjour indiquée est un temps conventionnel, c'est à dire que les débits des gaz sont comptés par rapport aux conditions standard de référence, sous la pression atmosphérique et à zero degré centigrade.

La température de l'enceinte, (5), peut être réglée par addition de vapeur d'eau amenée par le conduit (8). Elle se situe habituellement entre 1 200 et 2 500°C, de préférence entre 1 300 et 1 700°C.

Une fois brûles, les gaz sortent par le conduit (9).

Le reste du gaz naturel, amené par le conduit (4), est mélangé avec de la vapeur d'eau du conduit (10) pour être dirigé vers le réacteur de reformage catalytique (11) pouvant fonctionner dans le même domaine de pression que le réacteur d'oxydation (5).

Le rapport entre molécules d'eau du conduit 10 et atomes de carbone du conduit (4) est réglé de façon à être compris entre 1:1 et 100:1, de préférence entre 1,5:1 et 10:1.

La température est habituellement comprise entre 600 et 1 000°C, de préférence entre 700 et 900°C. Les conditions opératoires, par exemple la température et/ou le temps de séjour, sont réglés de manière à ne convertir que partiellement le méthane. On maintient, par exemple, une teneur de méthane résiduaire comprise entre 0,5 et 50%, de préférence entre 5 et 40% du gaz compté sec. Cette teneur résiduelle est très importante car c'est elle qui conditionne la pureté finale du gaz de synthèse.

Les gaz réformés sortent par le conduit (12) et sont amenés dans l'enceinte (13) où, par mélange adiabatique avec le gaz de combustion en provenance du conduit (9), il achèvent de transformer leur méthane résiduaire en mélange $CO/H_2$.

Les réaction dans l'enceinte (13) peuvent être d'origine purement thermique. Pour diminuer le volume de l'enceinte on peut cependant y mettre un catalysateur dont la présence est rendue possible par la faible teneur en suie de l'effluent de réacteur de combustion précédemment utilisé.

La température dans l'enceinte (13) est d'environ 800 à 1200°C.

Le gaz de synthèse résultant, utilisable pour la production de méthanol, sort par le conduit (14).

Pour la clarté du schéma, les enceintes (5) et (13) sont représentées séparément sur la figure 1.

Pour des raisons de commodité mécanique, ces enceintes peuvent également être disposées dans une même enveloppe métallique, réparties en deux compartiments communiquant entre eux.

L'epaisseur de l'enveloppe, constituée généralement d'une paroi métallique tapissée à l'intérieur d'une ou de plusieurs épaisseurs de réfractaire, étant fonction de la témperature des gaz avoisinants, une autre variante consistera à disposer les enceintes (5) et (13) de façon superposée ou concentrique (figures 2 et 3 respectivement). Dans ce cas, le chaleur de combustion de la zone 5 pourra se propager par conduction et rayonnement vers la zone 13.

Un autre perfectionnement (figure 4) consiste à prolonger le conduit (12) par un faisceau de tubes noyé dans le lit catalytique et destiné à abaisser par échange thermique la température de rayonnement de ce lit.

Comme on peut le voir d'après l'exemple 1, selon le rapport O2/C choisi la température dans l'enceinte (5) peut être exceptionnellement élevée.

Pour éviter un dégagement de chaleur excessif, on peut deriver une partie de l'oxygène (2) dans le conduit (15) qui l'amène directement dans l'enceinte (13) (exemple IV), étant entendu que l'on doit rester en dehors des limites explosives.

Une condition essentielle pour le bon fonctionnement du procédé de l'invention est de limiter cette dérivation à une valeur telle que, dans le mélange obtenu par addition des lignes (9), (12) et (15), la teneur en oxygène soit toujours inférieure à la valeur L (limite inférieure d'explosivité du mélange) obtenue par application de la loi de Le Chatelier selon la formule [6].

$$L = \frac{100}{\frac{P_{H_2}}{N_{H_2}} + \frac{P_{CO}}{N_{CO}} + \frac{P_{CH_4}}{N_{CH_4}}} \qquad [6]$$

$P_{H_2}$, $P_{CO}$ et $P_{CH_4}$ étant les proportions molaires de $H_2$ CO et $CH_4$ à l'entrée de l'eceinte (13) calculées de telle sorte que:

$P_{H_2} + P_{CO} + P_{CH_4} = 100$

$N_{H_2}$, $N_{CO}$, $N_{CH_4}$ étant les limités inférieures d'explosivité de respectivement l'hydrogène, l'oxyde de carbone et le méthane.

Exemple 1

On opère selon la schéma de la fig. 1, sous une pression d'environ 5 MPa.

On dispose de 3 400 kmoles/h de gaz naturel et de 1 320 kmoles/heure d'oxygène pratiquement pur.

Les gaz sont introduits respectivement dans les conduits (1) et (2). Le gaz naturel est à 350 degrés centigrades et a la composition suivante:

CO2: 1,8% en volumes
CH482,65%
C2H63,95%
C3H81,6%
Inertes: pour mémoire

——
100,00%

On devie 1 200 kmoles/1 h de gaz naturel dans le conduit (3) et, par le conduit (8), on lui ajoute 800 kmoles/h de vapeur d'eau surchauffée à 300 degrés centigrades. Au contact d'une flamme pilote 7, le méthane (3) et l'oxygéne (2) brûlent.

Comme on peut le voir, le rapport du nombre de molécules d'oxygéne au nombre d'atomes de carbone est de 0,94. Le même rapport, obtenu en excluant le $CO_2$ déjà contenu dans le gaz initial, est de 0,954.

A la sortie (9) de l'enceinte de combustion contrôlée (5), les gaz sont à une température d'environ 2 250 degrés centigrades et ont la composition moyenne suivante (% volume):

| | |
|---|---|
| CO: | 25,7% |
| CO2: | 3,8% |
| H2: | 30,8% |
| CH4: | traces |
| H2O: | 39,7% |
| Inertes: | traces |
| | 100,0 |

Le reste du gaz naturel, 2 200 kmoles par heure, est envoyé par le conduit (4) dans les tubes remplis de catalyseur au nickel (11).

Les tubes (11) sont chauffés extérieurement par des brûleurs au gaz naturel non représentés sur la figure 1.

Pour faciliter le craquage partiel des hydrocarbures et pour éviter le dépôt de coke, on envoie concurremment dans les tubes (11), par le conduit (10), un débit de vapeur d'eau surchauffeé d'environ 7 100 kmoles par heure.

Les gaz réformés dans les tubes (11) pénètrent dans le conduit (12) à une température d'environ 800°C avec approximativement la composition suivanté.

| | |
|---|---|
| CO: | 5,3 |
| CO2: | 6,4 |
| H2: | 37,0 |
| CH4: | 9,7 |
| H2O: | 41,6 |
| Inertes: | traces |
| | 100,0 |

Les gaz des conduits (9) et (12) passent dans l'enceinte (13).

L'enceinte (13) fonctionne sans catalyseur, dans des conditions sensiblement adiabatiques, à 970°C environ.

A leur sortie, les gaz comptés secs, ont en moyenne la composition volumique suivante:

| | |
|---|---|
| CO: | 20,2 |
| CO2: | 8,8 |
| H2: | 68,1 |
| CH4: | 2,9 |
| | 100,0 |

On notera que le rapport molaire H2/(2CO + 3 CO2) est égal à, 1,02, ce qui est pratiquement idéal pour la synthése du méthanol définie par les équations (3) et (4).

Exemple II

On opère comme dans l'exemple I. Toutefois, dans cette marche, on dérive seulement 594 kmoles/heure de gaz naturel vers l'enceinte (5) de combustion.

Pour maintenir la température à 1 500°C, on y ajoute 8 700 kmoles/h de vapeur d'eau. Le rapport molécules oxygène/atomes de carbone est voisin de 2.

En sortie de la combustion (9) on a un mélange formé uniquement d'eau et de CO2, sans suie.

Le reste du gaz naturel (2 806 kmoles/h) est envoyé aux tubes de reformage (11) avec de la vapeur d'eau dans un rapport molaire H2O/C sensiblement de 2,5:1.

La sortie du reformage (12) est réglée à 800°C et la composition gazeuse et approximativement la suivante:

| | |
|---|---|
| CO: | 5,6% |
| CO2: | 6,4% |
| H2: | 37,3% |
| CH4: | 11,0% |
| H2O: | 39,7% |
| | 100,0 |

Les deux débits de gaz (9 et 12) sont amenés dans l'enceinte (13) qui contient maintenant du catalyseur au nickel sur support réfractaire.

Après craquage adiabatique, on obtient un mélange dont la composition à sec est la suivante:

| | |
|---|---|
| CO: | 12,0% |
| CO2: | 15,0% |
| H2: | 70,1% |
| CH4: | 2,9% |
| | 100,0 |

La température du lit catalytique est de 870°C et on constate que le rapport molaire H2/(2 CO + 3 $CO_2$) est égal, à 1,016.

La quantité globale de vapeur d'eau utilisée dans cette marche est de 17 000 kmoles/h environ, à comparer aux 8 000 kmoles/h utilisées dans l'exemple I.

Exemple III

On opére comme dans l'Exemple 1, Toutefois, dans cette marche, on dérive 1 600 Kmoles par heure de gaz naturel vers l'enceinte (5) de combustion [$O_2$/C = 0,7 en moles, au lieu de 0,95 dans l'Exemple 1].

Les gaz sortent de l'enceinte (5) à 1 550 degrés centigrade environ avec la composition suivante en pourcent volume:

| | |
|---|---|
| CO: | 27,1 |
| CO2: | 3,2 |
| H2: | 45,1 |
| H2O: | 24,6 |
| CH4 et inertes: traces | |
| | 100,0 |

Les tubes de reformage (11) marchent avec 1 800 kmoles/h de gaz naturel et 9 150 kmoles/h de vapeur, et produisent à 800°C un gaz de composition volumique suivante:

| | |
|---|---|
| CO: | 4,1 |
| CO2: | 6,3 |
| H2: | 34,4 |
| CH4: | 4,9 |
| H2O: | 50,3 |
| | 100,0 |

Les gaz ainsi obtenus sont dirigés dur l'enceinte (13) qui est à nouveau vide de catalyseur. Après craquage le mélange se trouve à une température d'environ 930°C.

Le gaz, une fois séché et refroidi, a la composition moyenne suivante:

| | |
|---|---|
| CO: | 17,5 |
| CO2: | 10,9 |
| H2: | 68,6 |
| CH4: | 3,0 |
| | 100,0 |

Le rapport H2/(2 CO + 3 CO2) est, cette fois-ci, de 1,004.

Exemple IV

On maintient les mêmes débits de gaz vers les tubes (11) et l'enceinte (5) que dans l'exemple 1, mais on dérive 330 kmoles/h d'oxygène dans le conduit (15) pour les amener directement dans l'enceinte (13).

On obtient à peu de chose près la même composition à la sortie que dans l'exemple 1, mais la température à l'intérieure de (5) n'est plus que de 1550 degrés centigrade environ.

On notera que, à l'entrée de (13), la teneur en oxygène dans les gaz est seulement de 2% en volume, ce qui largement en dessous de la limite d'explosion de 5,5% donnée par la formule (6).

**Revendications**

1. Procédé de fabrication d'un gaz de synthèse ayant une composition appropriée à la synthèse du méthanol et utilisable, par exemple, pour cette synthèse, caractérisé par les étapes suivantes, mises en oeuvre sous une pression de 1 à 20 MPa:

a) on fait passer une première charge d'hydrocarbures, renfermant au moins 50% en moles de méthane, et mélange à de la vapeur d'eau, au contact d'un catalyseur de reformage à la vapeur d'eau, les conditions opératoires étant choisies de manière à ne convertir que 60 à 95%, compté en carbone, de la charge d'hydrocarbures, et l'on recueille un gaz relativement riche en hydrogène et renfermant la portion non-convertie de la charge d'hydrocarbures;

b) dans une zone de réaction distincte de celle l'étape (a), ou soumet une seconde charge d'hydrocarbures, renfermant au moins 50% en moles de méthane, à une combustion par flamme au contact d'un gaz renfermant de 90 à 100% d'oxygène, le rapport du nombre de molécules d'oxygène au nombre d'atomes de carbone de ladite seconde charge étant de 0,55: 1 à 2:1, et l'on recueille un gaz de combustion, relativement riche en oxydes de carbone et dont la température est de 1200 à 2500°C;

c) on mélange le gaz obtenu à l'étape (a) avec le gaz obtenu à l'étape (b) et, le cas échéant, on fait une injection contrôlée d'oxygène dans le mélange résultant de telle manière que sa teneur en oxygène soit toujours au-dessous de la limite inférieure d'explosivité du mélange, on fait circuler le mélange résultant dans une zone de reformage à la vapeur d'eau et on recueille le gaz de synthése formé;

d) le procédé étant en outre caractérisé en ce que le rapport de la quantité totale d'oxygène mis en jeu à la quantité totale d'hydrocarbures mis en jeu, exprimé en molécules d'oxygène/atomes de carbone, est de 0,2 à 0,7:1.

2. Procédé selon la revendication 1, dans lequel les charges d'hydrocarbures des étapes (a) et (b) sont deux fractions d'une même charge initiale.

3. Procédé selon l'une des revendications 1 et 2, dans lequel l'étape (c) est catalytique.

4. Procédé selon l'une des revendications 1 et 2, dans lequel l'étape (c) est thermique.

5. Procédé selon l'une des revendications 1 à 4, dans lequel, à l'étape (b), le temps de séjour dans la zone de combustion est de 0,001 à 100 secondes.

6. Procédé selon l'une des revendications 1 à 5, dans lequel les températures sont respectivement 600—1000°C pour l'étape (a) 1300—1700°C pour l'étape (b) et 800—1200°C pour l'étape (c).

7. Procédé selon l'une des revendications 1 à 6, dans lequel la température de l'étape (c) est obtenue par mélange adiabatique des gaz obtenus à l'étape (a) et à l'étape (b).

8. Procédé selon l'une des revendications 1 à 7, dans lequel le rapport molaire de l'eau aux hydrocarbures, comptés en carbone, est de 1,5:1 à 10:1 dans l'étape (a).

9. Procédé selon l'une des revendications 1 à 8, dans lequel l'étape (a) est effectuée avec du catalyseur au nickel.

**Patentansprüche**

1. Verfahren zur Herstellung eines Synthesegases mit einer für die Methanolsynthese geeigneten und für diese Synthese beispielsweise brauchbaren Zusammensetzung, gekennzeichnet durch die folgenden bei einem Druck von 1 bis 20 MPa durchgeführten Stufen:

a) man läßt eine erste Kohlenwasserstoffcharge, die wenigstens 50 Mol% Methan enthält und mit Wasserdampf vermischt ist, in Kontakt mit einem Wasserdampfreformierungskatalysator strömen, wobei die Arbeitsbedingungen derart gewählt sind, daß nur 60 bis 95%, gerechnet als Kohlenstoff, der

Kohlenwasserstoffcharge umgesetzt werden und man sammelt ein an Wasserstoff relativ reiches Gas, das den nicht umgesetzten Teil der Kohlenwasserstoffcharge einschließt;

b) in einer zur Stufe (a) unterschiedlichen Reaktionszone setzt man eine wenigstens 50 Mol% Methan enthaltende zweite Kohlenwasserstoffcharge einer Verbrennung mittels Flamme in Kontakt mit einem 90—100% Sauerstoff enthaltenden Gas aus, wobei das Verhältnis der Anzahl der Sauerstoffmoleküle zur Anzahl der Kohlenstoffatome dieser zweiten Charge 0,55:1 bis 2:1 beträgt und man sammelt ein an Kohlenstoffoxyden relativ reiches Verbrennungsgas, dessen Temperatur 1200 bis 2500°C beträgt;

c) man mischt das in der Stufe (a) erhaltene Gas mit dem in Stufe (b) erhaltenen Gas und führt gegebenenfalls eine geregelte Sauerstoffinjektion in das resultierende Gemisch ein, derart, daß sein Sauerstoffgehalt immer unterhalb der unteren Explosivitätsgrenze des Gemisches liegt und läßt das resultierende Gemisch in eine Wasserdampfreformierungszone strömen und sammelt das gebildete Synthesegas;

d) wobei das Verfahren sich im übrigen dadurch auszeichnet, daß das Verhältnis der Gesamtmenge an eingesetztem Sauerstoff zur Gesamtmenge an eingesetzten Kohlenwasserstoffen, ausgedrückt als Moleküle Sauerstoff/Atome Kohlenstoffe, 0,2 bis 0,7:1 beträgt.

2. Verfahren nach Anspruch 1, dadurch gekennzeichnet, daß die Kohlenwasserstoffchargen der Stufen (a) und (b) zwei Fraktionen ein und dergleichen Ausgangscharge sind.

3. Verfahren nach einem der Ansprüche 1 und 2, dadurch gekennzeichnet, daß die Stufe (c) katalytisch ist.

4. Verfahren nach einem der Ansprüche 1 und 2, dadurch gekennzeichnet, daß die Stufe (c) thermisch ist.

5. Verfahren nach einem der Ansprüche 1 bis 4, dadurch gekennzeichnet, daß in der Stufe (b) die Verweilzeit in der Verbrennungszone 0,001 bis 100 Sekunden beträgt.

6. Verfahren nach einem der Ansprüche 1 bis 5, dadurch gekennzeichnet, daß die Temperaturen jeweils 600—1000°C für Stufe (a), 1300—1700°C für Stufe (b) und 800—1200°C für Stufe (c) sind.

7. Verfahren nach einem der Ansprüche 1 bis 6, dadurch gekennzeichnet, daß die Temperatur der Stufe (c) durch adiabatisches Mischen der in Stufe (a) und in Stufe (b) erhaltenen Gase erhalten wird.

8. Verfahren nach einem der Ansprüche 1 bis 7, dadurch gekennzeichnet, daß das Molverhältnis des Wassers zu den Kohlenwasserstoffen, gerechnet als Kohlenstoff, 1,5:1 bis 10:1 in Stufe (a) beträgt.

9. Verfahren nach einem der Ansprüche 1 bis 8, dadurch gekennzeichnet, daß die Stufe (a) mit Nickelkatalysator durchgeführt wird.

**Claims**

1. A process for manufacturing a synthesis gas of composition suitable for methanol synthesis, characterized by the following steps, operated under a pressure of 1—20 MPa:

a) contacting with a steam-reforming catalyst, in a first reaction zone, a first hydrocarbons charge containing at least 50% by moles of methane and admixed with steam, the operating conditions being so selected as to convert only 60—95%, calculated as carbon, of the hydrocarbons charge, and recovering a gas of relatively high hydrogen content and containing the unconverted portion of the hydrocarbons charge;

b) subjecting, in a second reaction zone separate from that of step (a), a second hydrocarbons charge containing at least 50% by moles of methane, to a combustion with a flamme in contact with a gaz containing 90—100% of oxygen, the ratio of the number of oxygen moles to the number of carbon atoms of said second charge being from 0.55:1 to 2:1, and recovering a combustion gas of relatively high carbon oxides content, at a temperature of 1200—2500°C;

c) admixing the gas obtained in step (a) with the gas obtained in step (b) optionally with the addition of a controlled oxygen amount, so that the oxygen content of the resultant mixture be lower than the lower limit of explosive of the mixture, circulating the resultant mixture through a steam-reforming zone, and recovering the formed synthesis gas.

d) said process being further characterized in that the ratio of the total oxygen amount involved to the total hydrocarbons amount involved, expressed as oxygen moles/carbon atoms is from 0.2:1 to 0.7:1.

2. A process according to claim 1 wherein the hydrocarbons charge in steps (a) and (b) are two fractions of the same initial charge.

3. A process according to claim 1 or 2, wherein step (c) is catalytic.

4. A process according to claim 1 or 2, wherein step (c) is thermic.

5. A process according to one of claims 1 to 4 wherein, in step (b), the residence time in the combustion zone is 0.001—100 seconds.

6. A process according to one of claims 1 to 5, wherein the temperatures are respectively 600—1000°C for step (a), 1300—1700°C for step (b) and 800—1200°C for step (c).

7. A process according to one of claims 1 to 6 wherein the temperature of step (c) is obtained by adiabatic mixture of the gases obtained in step (a) and in step (b).

8. A process according to one of claims 1 to 7, wherein the molar ratio of water to hydrocarbons expressed as carbon, is from 1.5:1 to 10:1 in step (a).

9. A process according to one of the claims 1 to 8, wherein step (a) is performed with nickel catalyst.

FIG.1

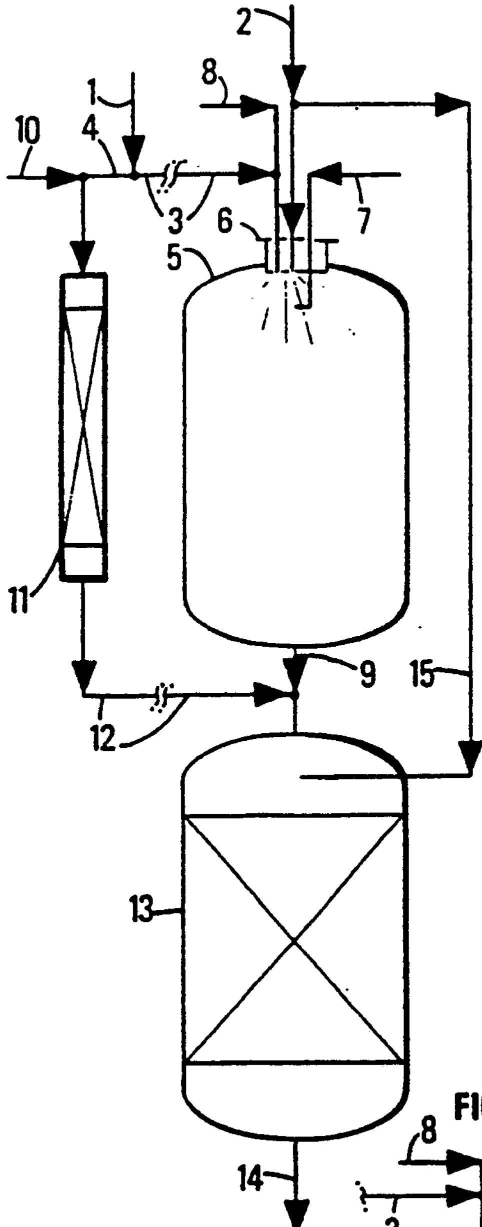


FIG.2

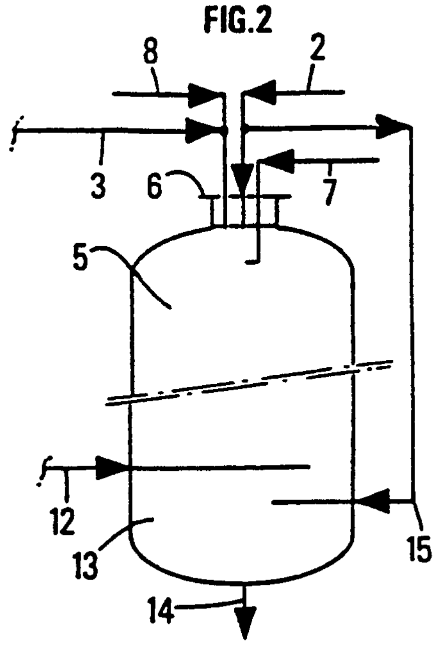


FIG.3

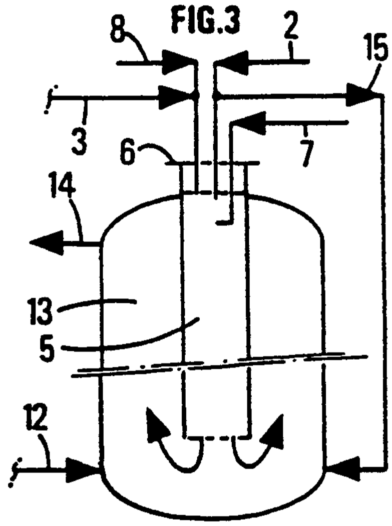


FIG.4